(19) **Europäisches Patentamt**

**European Patent Office**

**Office européen des brevets**

(11) Publication number: **0 409 157 A2**

# (12) EUROPEAN PATENT APPLICATION

(21) Application number: **90113654.9**

(22) Date of filing: **17.07.90**

(51) Int. Cl.5: **B01D 46/00**

(30) Priority: **19.07.89 GB 8916461**

(43) Date of publication of application:
**23.01.91 Bulletin 91/04**

(84) Designated Contracting States:
**DE FR GB IT**

(71) Applicant: **KLEENAIR MARKETING LTD.**
**25, Airfield Road**
**Christchurch, Dorset BH23 3TG(GB)**

(72) Inventor: **White, Marten Boyd**
**The Old Barn, Sopley**
**Nr. Christchurch, Dorset BH23 7AZ(GB)**

(74) Representative: **Turner, Paul Malcolm et al**
**URQUHART DYKES & LORD 8 Lindsay**
**Roadoad**
**Poole Dorset BH13 6AR(GB)**

(54) **Air filtering control system.**

(57) A method of and apparatus for filtering air by passing it through a filtration system which includes an electrically driven rotary fan. The speed of rotation of the fan is controlled according to the number of people present in the room, which is gauged by the volume of sound sensed by a sound detection system.

EP 0 409 157 A2

## AIR FILTERING CONTROL SYSTEM

This invention relates to air filtering systems and is particularly concerned with a control system for such systems.

There is currently an awareness of the deleterious effect of tobacco smoke on human beings, and a consequent demand for apparatus which will effectively filter the air in rooms used by the public.

Several such devices are known which comprise an electrically driven fan which causes the contaminated air to pass through a filter from where it is recirculated into the environment as clean air. The majority of such known devices are switched on or off as required and some have a multi-speed speed fan in order that the rate of filtering of the air can be increased or decreased according to the need.

The difficulty arising from that type of filter unit is that it sometimes does not get switched on when it should be, and conversely, it is left switched on after its need has terminated. There is thus an obvious need for a control system to automatically regulate the fan motor according to the needs of the filtration unit, particularly an air filtration unit whose degree of operation can be modulated automatically in response to increase or decrease in the number of people present in a room or building.

Some filtration units are actuated when the degree of contamination reaches a predetermined level. That type of system has the disadvantage that filtration of the air does not start until the contamination is already present.

It is advantageous if the fan motor remains switched on, albeit at a low speed, even when a room is unoccupied to ensure that any remaining or ingressional pollution is cleared, the speed of operation being increased immediately as the room becomes occupied and then modulated according to the increase or decrease of occupation.

It is recognized that where there is a congregation of people, a certain proportion of those present will be smokers. Obviously, then, the larger the congregation, the more smoke will be likely to contaminate the atmosphere.

It is also to be expected that under normal circumstances the amount of noise to be heard in a room will be in proportion to the number of people present.

United States Patent No. 4223831 describes a temperature control system using a microphone to detect the presence or absence of people in a room and to actuate a heating control system accordingly. United States Patent No. 4462540 describes a sound level detecting circuit used in conjunction with an air temperature level detecting circuit. The sound detector actuates an on/off switch associated with a thermostat.

German Patent No. 3147085 describes a system for controlling heating or cooling which includes assessing the number of people in a room by means of a noise sensor.

Japanese Patent Publication No. 860094159A describes a filtration unit which is actuated when the degree of contamination reaches a predetermined level. Such a unit is complicated and expensive and needs regular recalibration to be effective. It suffers the major disadvantage that the level of pollution has to build up before such a system is actuated, to the disadvantage of both equipment and personnel present.

None of the above patent specifications describes a system whereby the speed of a fan motor in an air filtration system is variably controlled according to an arrangement which senses the mean ambient noise level in a room.

According to the invention there is provided a method of filtering air whereby the volume of air being passed through an air filtration system is controlled according to the volume of sound present in the environs of the filtration system.

The air is caused to pass through the air filtration system by means which includes an electrically-driven rotary fan, and the volume of sound present in the environs of the filtration system is used to control the speed of rotation of the fan.

In one aspect the speed of rotation of the fan is proportional to the mean ambient sound level over a pre-determined length of time.

The sound present may be filtered to eliminate any noise issuing from the filtration unit itself, and when the sound level is substantially zero, the electrically driven motor of the fan may be rotated at a slow speed.

The invention further includes apparatus for filtering air wherein there is provided an air filtration unit which includes an electrically-driven rotary fan, and a controlled system including sound detecting means, and means responsive to the sound detecting means for influencing the actuation of the fan.

The apparatus may include a control system wherein a microphone is connected by an amplifer to an AC to DC filter, and a phase angled controller, and a triac to control the speed of the electrically-driven fan.

In one form the apparatus includes a display influenced by the microphone and capable of indicating the level of noise present, and therefore the speed of the fan.

In a further aspect the DC level is arranged to be proportional to the mean ambient sound level over a predetermined period of time, and there may be included a filter to filter the sound detected by the microphone in order to eliminate any noise from the air filtration unit itself.

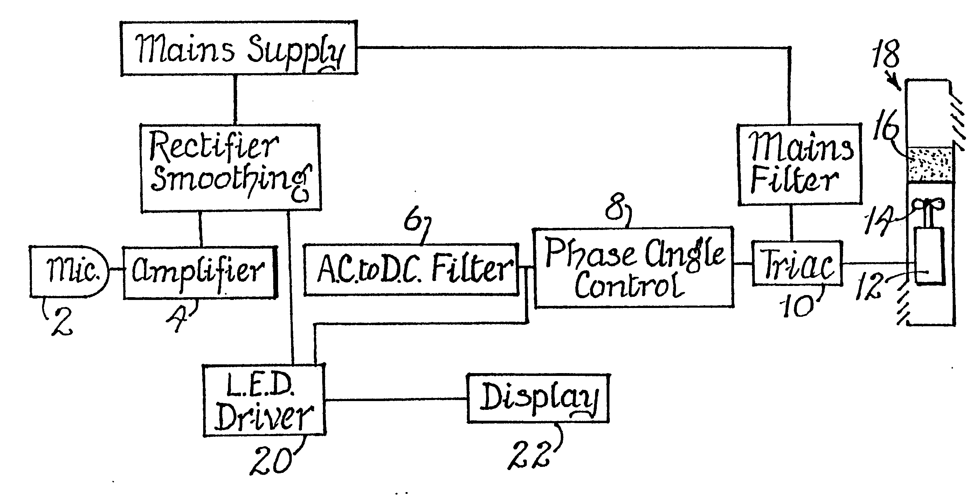

The invention will now be described, by way of example, with reference to the accompanying drawing which is a block diagram of the control system according to the invention.

As seen in the drawing, the system includes a microphone 2 which is connected to an amplifier 4 and an A.C. to D.C. filter 6. A phase angle controller 8 and triac 10 are provided in the system to control the speed of a motor 12 which drives a fan 14 to cause the air to pass through a filter 16 within the air filter unit generally designated as 18.

The circuit also includes an arrangement to indicate to the user the speed of the fan motor 12 and hence the degree of filtration of the air in the room where the unit is installed. A signal from the filter 6 is passed through an L.E.D. driver 20 to a display unit 22 which may be located either on the filtration unit cabinet or at any other point convenient to the user.

The arrangement is such that the D.C. level is proportional to the mean ambient sound level of the background noise over a certain period of time. This time constant is preferably pre-set during manufacture but may be adjustable by the user according to circumstances in the particular environment of the installation. The sound detected by the microphone is filtered to eliminate any noise from the filtration unit itself.

In practice the arrangement is such that when a room is unoccupied and the sound level is substantially zero, the fan motor runs at a very slow, "tick-over", speed to ensure that any remaining or ingressional pollution is filtered. As the room becomes occupied the speed is modulated in proportion to the degree of occupation.

**Claims**

1. A method of filtering air whereby the volume of air being passed through an air filtration system is controlled according to the volume of sound present in the environs of the filtration system.

2. A method according to claim 1 wherein the filtration system includes an electrically-driven rotary fan and the speed of rotation of the fan is controlled according to the volume of sound present in the environs of the filtration system.

3. A method according to one or both of the above claims wherein the speed of rotation of the fan is proportional to the mean ambient sound level over a pre-determined length of time.

4. A method according to any or all of the above claims wherein the sound present is filtered to eliminate any noise issuing from the filtration unit itself.

5. A method according to any or all of the above claims where, when the sound level is substantially zero, the electrically-driven motor of the fan is rotated at a slow speed.

6. Apparatus for filtering air wherein there is provided an air filtration unit which includes an electrically-driven rotary fan, and a control system including sound detecting means, and means responsive to the sound detecting means for influencing the actuation of the fan.

7. Apparatus according to claim 6 wherein the control system includes a microphone connected by an amplifer to an AC to DC filter, and a phase angled controller, and a triac to control the speed of the electrically-driven fan.

8. Apparatus according to claim 6 or 7 wherein there is provided a display influenced by the microphone and capable of indicating the level of noise present, and therefore the speed of the fan.

9. Apparatus according to claim 7 or 8 wherein the DC level is arranged to be proportional to the mean ambient sound level over a predetermined period of time.

10. Apparatus according to any or all of claims 6 to 9 wherein there is provided a filter to filter the sounds detected by the microphone in order to eliminate any noise from the air filtration unit itself.